# EUROPEAN PATENT SPECIFICATION

(11) **EP 2 650 677 B1**
(45) Date of publication and mention of the grant of the patent: **13.08.2014**
(21) Application number: 12168758.6
(22) Date of filing: 21.05.2012
(51) Int. Cl.: G01N 27/327

(54) **Electrochemical strip and manufacturing method thereof**
Elektrochemischer Streifen und Herstellungsverfahren dafür
Bandelette électrochimique et son procédé de fabrication

(30) Priority: 11.04.2012 US 201213444065
(43) Date of publication of application: 16.10.2013
(73) Proprietor: Yutek Tronic Inc., New Taipei City 221 (TW)
(72) Inventor: Huang, Chuan-Hsing, 111 Taipei City (TW)
(74) Representative: Lang, Christian

(56) References cited:
- WO-A2-2009/029859
- WO-A2-2011/012754

## Description

### BACKGROUND OF THE INVENTION

### 1. Technical Field

The present invention relates to an electrochemical strip, and more particularly to an electrochemical strip for bio-test.

### 2. Description of Related Art

The development of the mechanical and electrical technology facilitates detection of biological samples via electrochemical or optical methods. By employing electrochemical method, for example, blood sugar can be detected via redox reaction that occurs when glucose in blood sample reacts with glucose oxidase (GOD) coated on the test strip. Specifically, an electric signal produced by redox reaction is used to detect the content of glucose participated in the response, and the signal can be converted to the concentration of blood sugar. By employing optical method, a reaction occurred between glucose and enzyme results in changing of color in test strip, then the change of color is detected and converted to concentration of blood sugar via colorimetric method.

Recently, an electrochemical strip is employed increasingly. See for example WO 2011/012754. Since the strip needs to detect an electric current signal produced by the electrochemical reaction, the strip needs to have a conductive electrode to receive the signal and transmit the signal to a measuring instrument for conversion. According to the techniques well known to those skilled in the art, the conductive electrode is usually made by plating nickel (Ni) and palladium (Pd) on a copper electrode or coating active-carbon layer on a silver paste. However, the general cost of electro-deposing nickel and palladium on a copper electrode is high. On the other hand, there is a method to form the electrode by directly disposing an inert group metal such as gold, platinum, and palladium on a substrate via vapor-deposition or sputtering-deposition, and then eliminating the unnecessary part via etching to keep the necessary parts only. However, this method results in serious material consumption and high manufacturing cost. Additionally, one may manufacture the electrode by coating an active-carbon layer on printed silver paste circuits to reduce the cost. Nevertheless, the manufactured electrodes have worse accuracy and stability in measurement than the electrodes made via the vapor-deposition or sputtering-deposition and which will consumes extra cost in quality control.

### SUMMARY OF THE INVENTION

In an attempt to overcome the recited defects of the existing test strips, the present invention provides an electrochemical strip including a substrate and an electrode disposed on the substrate. The electrode includes a conductive paste layer, a first metal layer, a second metal layer, a third metal layer, and a fourth metal layer. The conductive paste layer is made of a material selected from the group consisting of copper paste, nickel paste, silver paste, and silver-carbon paste. The first metal layer is made of a group VIII metal. The second metal layer is made of nickel (Ni). The third metal layer is made of a group VIII metal. The fourth metal layer is made of a metal selected from the group consisting of palladium (Pd), gold (Au), and platinum (Pt).

An objective of the present invention is to provide an electrochemical strip including printed conductive paste and thus facilitate the production of a bio-test strip and effectively reduce the manufacturing cost.

Another objective of the present invention is to provide an electrochemical strip including palladium (Pd) as the outer layer material of the nickel layer, thus effectively prevents leaking of nickel (Ni) and is contributive to the disposition of the following layers.

Still another objective of the present invention is to provide an electrochemical strip including palladium (Pd), gold (Au), or platinum (Pt) as the material in the outer layer of the electrode, thus effectively increases sensitivity and specificity of the test.

In addition, the present invention provides an electrochemical strip including a substrate and an electrode disposed on the substrate. The electrode includes a conductive paste layer, a first metal layer, a second metal layer, a third metal layer, and a fourth metal layer. The conductive paste layer is made of a material selected from the group consisting of copper paste, nickel paste, silver paste, and silver-carbon paste. Furthermore, the conductive paste layer is printed on the substrate, and then is roughened by etching. The first metal layer, which is made of a group VIII metal, is chemically plated on the conductive paste layer. The second metal layer, which is made of nickel, is chemically plated on the first metal layer. The third metal layer, which is made of a group VIII metal, is chemically plated on the second metal layer. The fourth metal layer, which is made of a metal selected from the group consisting of palladium (Pd), gold (Au), or platinum (Pt), is chemically plated on the third metal layer.

An objective of the present invention is to provide an electrochemical strip including printed conductive paste and thus facilitates the production of a bio-test strip and effectively reduces the manufacturing cost.

Another objective of the present invention is to provide an electrochemical strip including palladium (Pd) as the outer layer material of the nickel layer, thus effectively prevents leaking of nickel (Ni) and is contributive to the disposition of the following layers.

Still another objective of the present invention is to provide an electrochemical strip including palladium (Pd), gold (Au), or platinum (Pt) as the material in the outer layer of the electrode, thus effectively increases sensitivity and specificity of the test.

### BRIEF DESCRIPTION OF THE DRAWINGS

The invention as well as a preferred mode of use, further objectives and advantages thereof will be best understood by reference to the following detailed description of illustrative embodiments when read in conjunction with the accompanying drawings, wherein:
Fig. 1A is a schematic diagram representing an electrochemical strip according to a first embodiment of the present invention;
Fig. 1B is a cross-sectional view taken along A-A line of Fig. 1A, showing the electrochemical strip according to the first embodiment of the present invention;
Fig. 2A is a schematic diagram representing an electrochemical strip according to a second embodiment of the present invention;
Fig. 2B is a cross-sectional view taken along B-B line of Fig. 2A, showing the electrochemical strip according to an example of the second embodiment of the present invention;
Fig. 2C is a cross-sectional view taken along B-B line of Fig. 2A, showing the electrochemical strip according to an another example of the second embodiment of the present invention;
Fig. 3 is a flow chart illustrating steps of a manufacturing method of an electrochemical strip according to a first embodiment of the present invention;
Fig. 4A is a flow chart illustrating steps of a manufacturing method of an electrochemical strip according to one example of a second embodiment of the present invention; and
Fig. 4B is a flow chart illustrating steps of a manufacturing method of an electrochemical strip according to another one example of the second embodiment of the present invention.

### DETAILED DESCRIPTION OF THE PREFERRED EMBODIMENTS

As mentioned above, the invention provides a solution to the problem that a typical strip for bio-test may encounter. The embodiments of the invention will be described herein below with reference to the accompanying drawings.

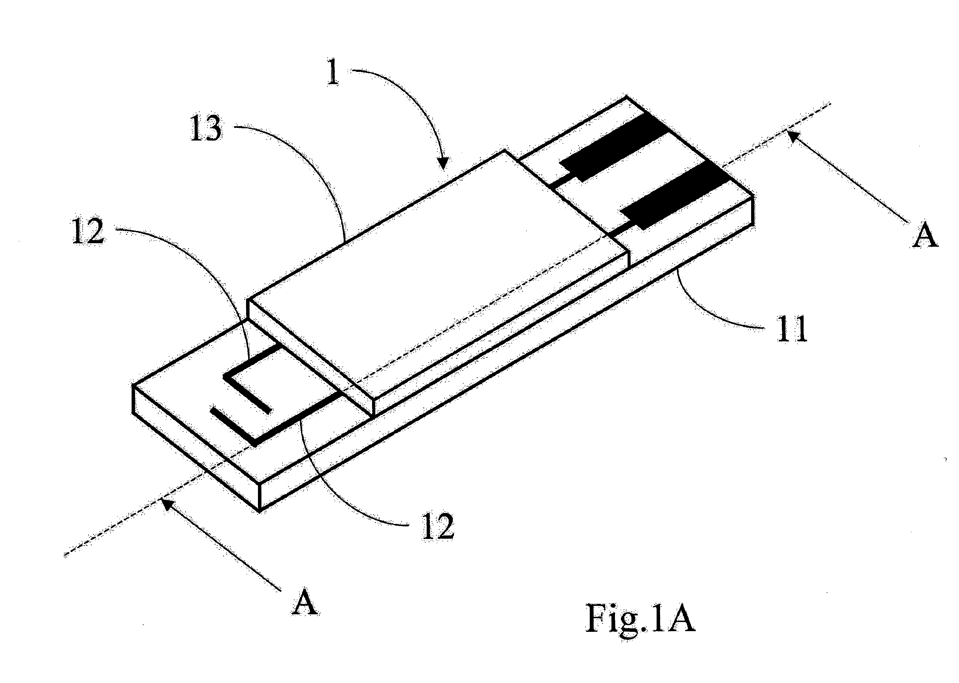

Referring to Fig. 1A, the electrochemical strip 1 according to a first embodiment of the invention includes a substrate 11, an electrode 12 disposed on the substrate 11, and an insulating layer 13 disposed on the electrode 12. The material used for the substrate 11 can be bio-inert plastic such as polyethylene terephthalate (PET), polycarbonate (PC), polyimide, glass fiber or phenolic resin.

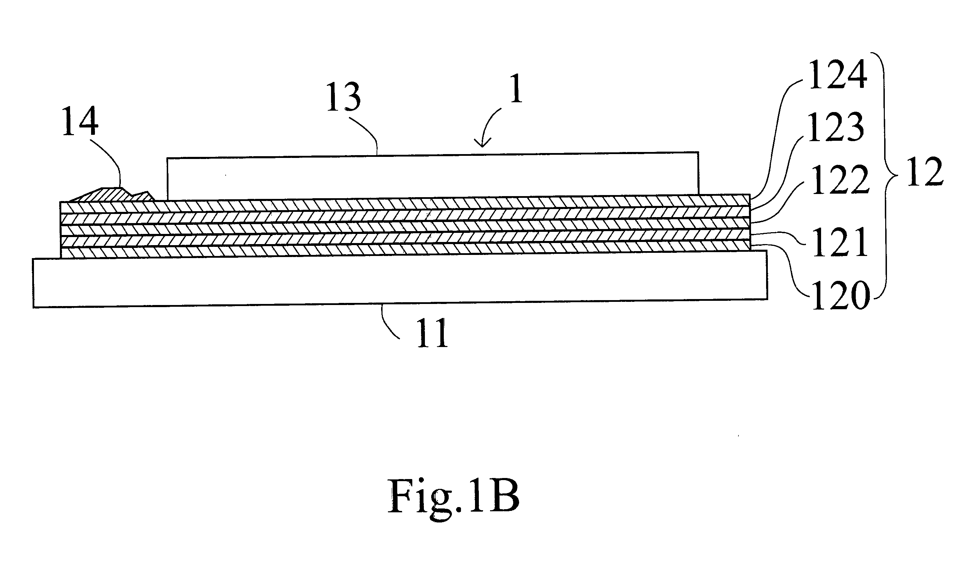

Referring to Fig. 1B, the electrode 12 includes several layers serially stacked on the substrate 11. These layers are a conductive paste layer 120, a first metal layer 121, a second metal layer 122, a third metal layer 123, and a fourth metal layer 124. The first metal layer 121, the second metal layer 122, the third metal layer 123, and the fourth metal layer 124 are disposed via chemical plating.

The conductive paste layer 120 is a layer disposed on the substrate 11 via printing and is made of a material selected from the group consisting of copper paste, nickel paste, silver paste, and silver-carbon paste. Furthermore, the substrate 11 with the conductive paste layer 120 is etched by using plasma to eliminate the debris of the conductive paste layer 120 after the conductive paste layer 120 is printed on the substrate 11, and then the surface of the conductive paste layer 120 is activated by acid-washing.

Etching and acid-washing mentioned above are contributive to the following disposition of the first metal layer 121, the second metal layer 122, the third metal layer 123, and the fourth metal layer 124. Moreover, the thickness of the printed conductive paste layer 120 influences the chemical plating effect of the first metal layer 121.

In addition, the resin material used in the conductive paste layer 120 is the same with that used in the substrate 11. For example, the resin material used in the conductive paste layer 120 and for the substrate 11 is PET. As a result, the chemical plating effect of the first metal layer 121 becomes much better.

The first metal layer 121, which is made of a group VIII metal such as nickel (Ni), palladium (Pd), and platinum (Pt), is chemically plated on the conductive paste layer 120, and palladium (Pd) is preferably used for chemically plating the following second metal layer 122.

The second metal layer 122, which is made of nickel, is preferably used for chemically plating on the first metal layer 121. The third metal layer 123, which is made of a group VIII metal, is chemically plated on the second metal layer 122.

The fourth metal layer 124 is made of a group metal with good conductivity such as palladium (Pd), gold (Au), and platinum (Pt). It is preferably to use palladium (Pd) to form the fourth metal layer 124 for that a best accuracy of measurement could be obtained and that palladium (Pd) is a catalyst to facilitate electrochemical reaction. In this way, the electrons resulted from the electrochemical reaction could smoothly move within the electrode 12, and which benefits measurement of signals and evaluation of the corresponding concentration of an unknown sample to be tested via the electrochemical strip 1.

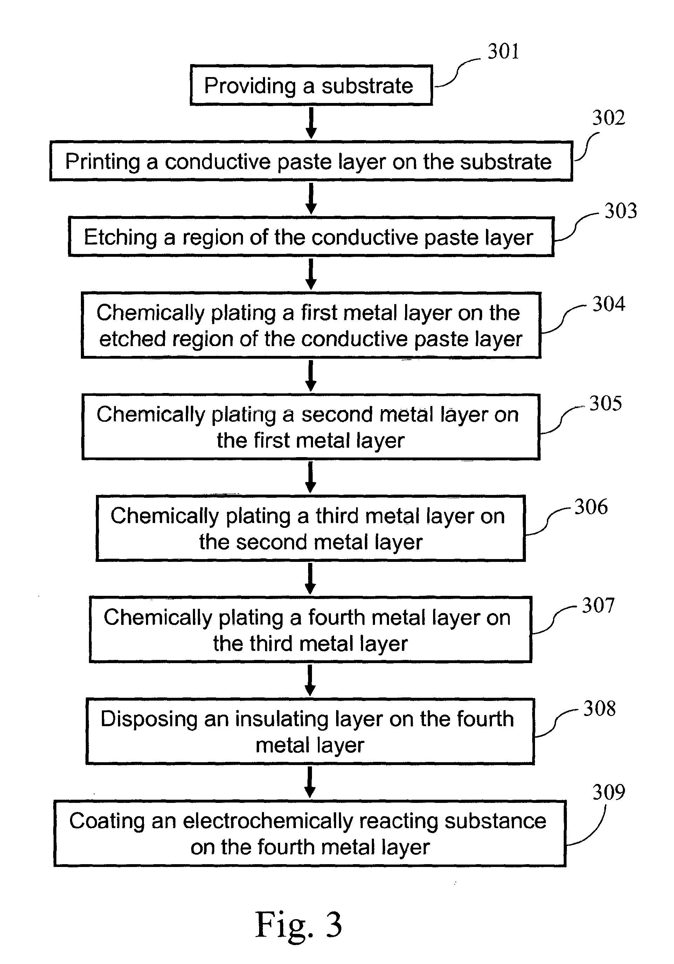

Referring to Fig. 3, a manufacturing method of the electrochemical strip 1 according to the first embodiment of the present invention includes the following steps:
Step 301: Providing a substrate 11. The material used for the substrate 11 can be bio-inert plastic such as polyethylene terephthalate (PET), polycarbonate (PC), polyimide, glass fiber or phenolic resin.
Step 302: Disposing an electrode layer 12 on the substrate 11, including the step of printing a conductive paste layer 120 on the substrate 11. The conductive paste layer 120 is made of a material selected from the group consisting of copper paste, nickel paste, silver paste, and silver-carbon paste.
Step 303: Etching a region of the conductive paste layer 120, wherein the substrate 11 with the conductive paste layer 120 is etched by using plasma to eliminate the debris of the conductive paste layer 120, and then the surface of the conductive paste layer 120 is activated by acid-washing.
Step 304: Chemically plating a first metal layer 121 on the etched region of the conductive paste layer 120, wherein the first metal layer 121 is made of a group VIII metal.
Step 305: Chemically plating a second metal layer 122 on the first metal layer 121, wherein the second metal layer 122 is made of nickel (Ni).
Step 306: Chemically plating a third metal layer 123 on the second metal layer 122, wherein the third metal layer 123 is made of a group VIII metal.
Step 307: Chemically plating a fourth metal layer 124 on the third metal layer 123, wherein the fourth metal layer 124 is made of a material selected from the group consisting of palladium (Pd), gold (Au) and platinum (Pt).
Step 308: Disposing an insulating layer 13 on the fourth metal layer 124.
Step 309: Coating an electrochemically reacting substance 14 on the fourth metal layer 124.

In the first embodiment mentioned above, the whole electrode 12 is plated with the first metal layer 121, the second metal layer 122, the third metal layer 123, and the fourth metal layer 124. Otherwise, users can determine the layering structure of the electrode 12 according to the actual situation.

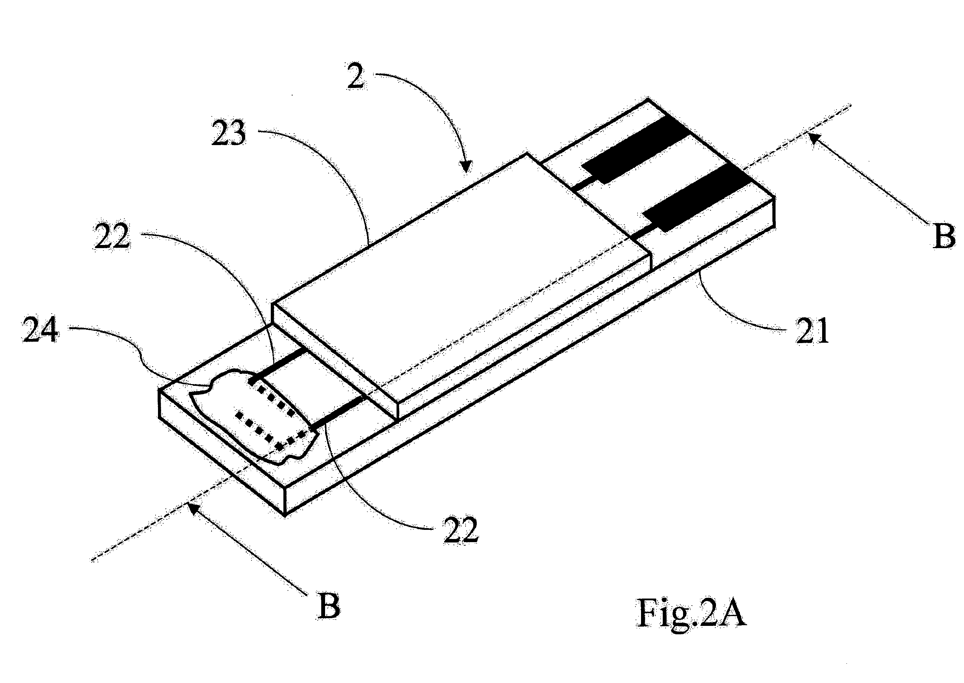

Referring to Fig. 2A, an electrochemical strip 2 according to a second embodiment of the invention includes a substrate 21, an electrode 22 disposed partly on the substrate 21, and an insulating layer 23 disposed partly on the electrode 22.

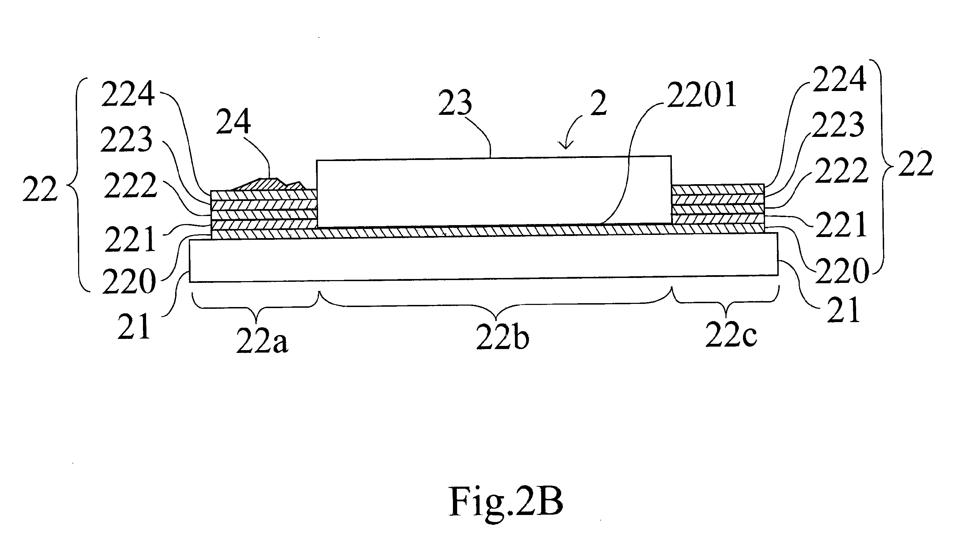

Referring to Fig. 2B, the insulating layer 23 is disposed partly on a region of the conductive paste layer 220 that excludes the electrode 22. In this embodiment of the present invention, the electrode 22 is partly formed on the substrate 21 such that the electrochemical strip 2 has a reacting region 22a, an inserting region 22c, and a conducting region 22b. The reacting region 22a is a region including only the conductive paste layer 220 and the electrode 22 and is served for an electrochemical reaction to be detected on the electrochemical strip 2, the conducting region 22b is a region including only the conductive paste layer 220 and the insulating layer 23 and is served for communication of an electrical signal resulted from the electrochemical reaction, and the inserting region 22c is a region including only the conductive paste layer 220 and the electrode 22 and is served for connecting with a bio-testing apparatus.

The reacting region 22a is coated with a substance 24 to be electrochemically reacting with an unknown sample to produce an electrical signal, and the electrical signal is transmitted and conducted through the conducting region 22b to the inserting region 22c. The conducting region 22b is served for communication of an electrical signal resulted from the electrochemical reaction between the reacting region 22a and the inserting region 22c. The inserting region 22c is served as the connecting region between the electrochemical strip 2 and the bio-testing apparatus. Actually, the electrical signal is transmitted from the inserting region 22c to the bio-testing apparatus to be converted to a corresponding information such as concentration of the unknown sample.

Referring to Fig. 2B, in an example of the embodiment, the conductive paste layer 220 is disposed on the substrate 21 firstly to be distributed on the reacting region 22a, the conducting region 22b, and the inserting region 22c. The conducting region 22b has only the conductive paste layer 220 and the insulating layer 23, while that the reacting region 22a and the inserting region 22c each has the conductive paste layer 220, the first metal layer 221, the second metal layer 222, the third metal layer 223, and the fourth metal layer 224.

Accordingly, a region including only the conductive paste layer 220, the first metal layer 221, the second metal layer 222, the third metal layer 223, and the fourth metal layer 224 is served as a region for an electrochemical reaction to be detected on the electrochemical strip, while a region including only the insulating layer and the conductive paste layer is served as a region for communicating a signal resulted from the electrochemical reaction.

The reacting region 22a is coated with a substance 24 to be reacted with an unknown sample via electrochemical reaction to produce an electrical signal to be transmitted to the inserting region 22c. Hence, the material used in the reacting region 22a should be a conductive metal with good conductivity, in order to reduce electrical resistance and Signal/Noise Ratio of the electrode 22, and to increase sensitivity and specificity of the electrochemical strip 2 during test. Moreover, since the inserting region 22c needs to transmit an electric signal to the bio-testing apparatus for calculation, the material used for the inserting region 22c should be a conductive metal with good conductivity, in order to have good sensitivity and specificity of the electrochemical strip 2 during test.

During manufacturing the electrochemical strip 2, the substrate 21 with printed conductive paste layer 220 is processed by plasma and acid-washing after the printing process of the conductive paste layer 220. The conducting region 22b served for communicating a signal resulted from the electrochemical reaction is further sprayed or coated with an insulating paint layer 2201. Due to the insulating paint layer 2201, the conducting region 22b never contacts with the reacting solution used in chemically plating during the following manufacturing steps. Apparently, the amount of several metals used in the first metal layer 221, the second metal layer 222, the third metal layer 223, and the fourth metal layer 224 is reduced effectively.

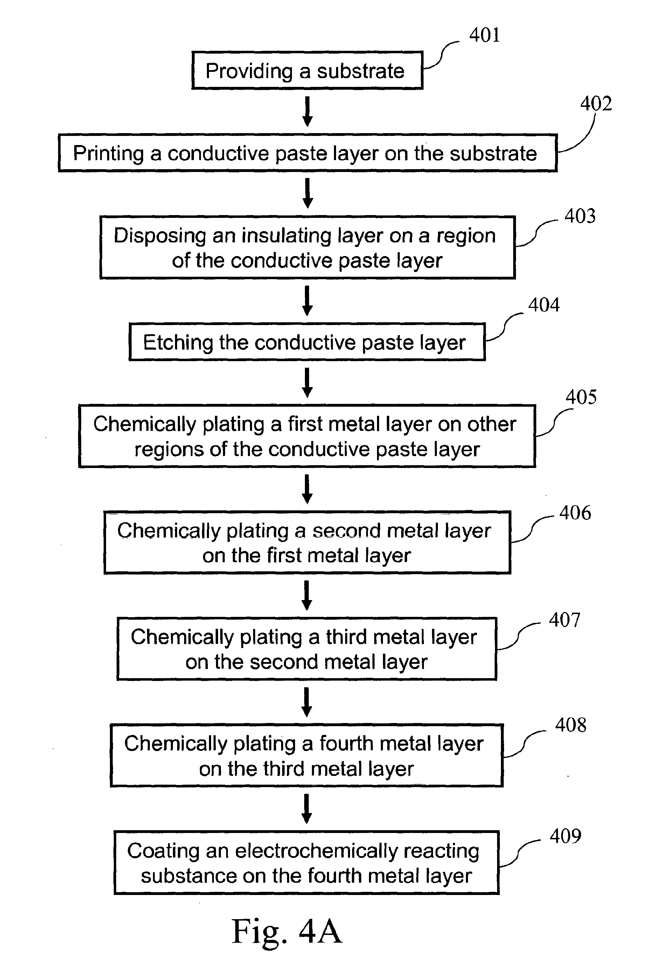

Referring to Fig. 4A, a manufacturing method of the electrochemical strip according to the first example of the second embodiment of the present invention includes the following steps:
Step 401: Providing a substrate 21. The material used for the substrate 11 can be bio-inert plastic such as polyethylene terephthalate (PET), polycarbonate (PC), polyimide, glass fiber or phenolic resin.
Step 402: Disposing an electrode layer 22 on the substrate 21, including the step of printing a conductive paste layer 220 on the substrate 21. The conductive paste layer 220 is made of a material selected from the group consisting of copper paste, nickel paste, silver paste, and silver-carbon paste.
Step 403: Coating an insulating paint layer 2201 and disposing an insulating layer 23 on a region 22b of the conductive paste layer 220, wherein the region 22b consisting of the insulating layer 23 and the conductive paste layer 220 is served for communicating a signal resulted from the electrochemical reaction.
Step 404: Etching the conductive paste layer 220, wherein the substrate 21 with the conductive paste layer 220 is etched by using plasma to eliminate the debris of the conductive paste layer 220, and then the surface of the conductive paste layer 220 is activated by acid-washing.
Step 405: Chemically plating a first metal layer 221 on other regions 22a and 22c other than the region 22b of the conductive paste layer 220, wherein the first metal layer is made of a group VIII metal.
Step 406: Chemically plating a second metal layer 222 on the first metal layer 221, wherein the second metal layer 222 is made of nickel (Ni).
Step 407: Chemically plating a third metal layer 223 on the second metal layer 222, wherein the third metal layer 223 is made of a group VIII metal.
Step 408: Chemically plating a fourth metal layer 224 on the third metal layer 223, wherein the fourth metal layer 224 is made of a material selected from the group consisting of palladium (Pd), gold (Au), and platinum (Pt).
Step 409: Coating an electrochemically reacting substance 24 on the fourth metal layer 224.

With respect to the first example of the second embodiment mentioned above, the disposition of the layering structure of the electrode 22 can be modified in order to reduce the manufacturing cost. Accordingly, in an another example of the second embodiment, an electrochemical strip is developed to have one side formed with only a carbon layer on a region of the conductive paste layer to save the cost of forming the first metal layer 221, the second metal layer 222, the third metal layer 223, and the fourth metal layer 224.

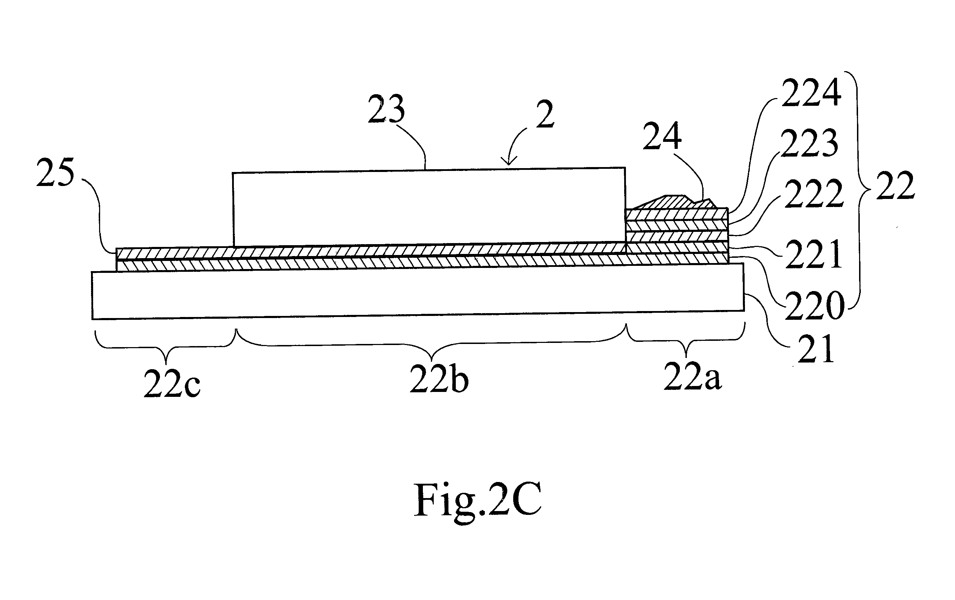

Referring to Fig. 2C, a carbon layer 25 is printed partly on a region of the conductive paste layer 220. In this example, the electrochemical strip 2 is formed to have a reacting region 22a, an inserting region 22c, and a conducting region 22b, wherein the reacting region 22a is served for an electrochemical reaction to be detected on the electrochemical strip 2, the conducting region 22b is served for communication of an electrical signal resulted from the electrochemical reaction, and the inserting region 22c is served for connecting with a bio-testing apparatus.

Only the reacting region 22a is formed with the electrode 22 and is coated with a substance 24 to be electrochemically reacting with an unknown sample to produce an electrical signal, and the electrical signal is transmitted and conducted through the conducting region 22b to the inserting region 22c. The conducting region 22b is served for communication of an electrical signal resulted from the electrochemical reaction between the reacting region 22a and the inserting region 22c. The inserting region 22c is served as the connecting region between the electrochemical strip 2 and the bio-testing apparatus. Actually, the electrical signal is transmitted from the inserting region 22c to the bio-testing apparatus to be converted to get a corresponding information such as concentration of the unknown sample.

Referring to Fig. 2C, the conductive paste layer 220 is disposed on the substrate 21 firstly to be distributed on the reacting region 22a, the conducting region 22b and the inserting region 22c. Secondly, the carbon layer 25 is printed partly on the conductive paste layer 220 to be distributed on the conducting region 22b and the inserting region 22c. Hence, the inserting region 22c has only the conductive paste layer 220 and the carbon layer 25, the conducting region 22b has the conductive paste layer 220, the carbon layer 25, and the insulating layer 23, and the reacting region 22a has the conductive paste layer 220, the first metal layer 221, the second metal layer 222, the third metal layer 223, and the fourth metal layer 224.

Accordingly, the region including only the conductive paste layer 220, the first metal layer 221, the second metal layer 222, the third metal layer 223, and the fourth metal layer 224 is served as a region for an electrochemical reaction to be detected on the electrochemical strip, the region including only the insulating layer 23, the carbon layer 25, and the conductive paste layer 220 is served as a region for communicating a signal resulted from the electrochemical reaction, and the region including only the carbon layer 25 and the conductive paste layer 220 is served as a region for connecting the electrochemical strip 2 and the bio-testing apparatus.

The reacting region 22a is coated with a substance 24 to be reacted with an unknown sample via electrochemical reaction to produce an electrical signal to be transmitted to the inserting region 22c. Hence, the material used in the reacting region 22a should be a conductive metal with good conductivity, in order to reduce electrical resistance and Signal/Noise Ratio of the electrode 22, and to increase sensitivity and specificity of the electrochemical strip 2 during test. Moreover, since the inserting region 22c needs to transmit an electric signal to the bio-testing apparatus for calculation, the material carbon with good conductivity is chosen for the inserting region 22c in order to have good sensitivity and specificity of the electrochemical strip 2 during test. On the other hand, the manufacturing cost of using carbon in place of using several metals mentioned above is reduced.

During manufacturing the electrochemical strip 2 according to this example of the second embodiment of the present invention, chemically plating the first metal layer 221, the second metal layer 222, the third metal layer 223, and the fourth metal layer 224 on the inserting region 22c of the conductive paste layer 220 is replaced with printing the carbon layer 25. Apparently, the amount of several metals used in the first metal layer 221, the second metal layer 222, the third metal layer 223, and the fourth metal layer 224 is reduced more effectively.

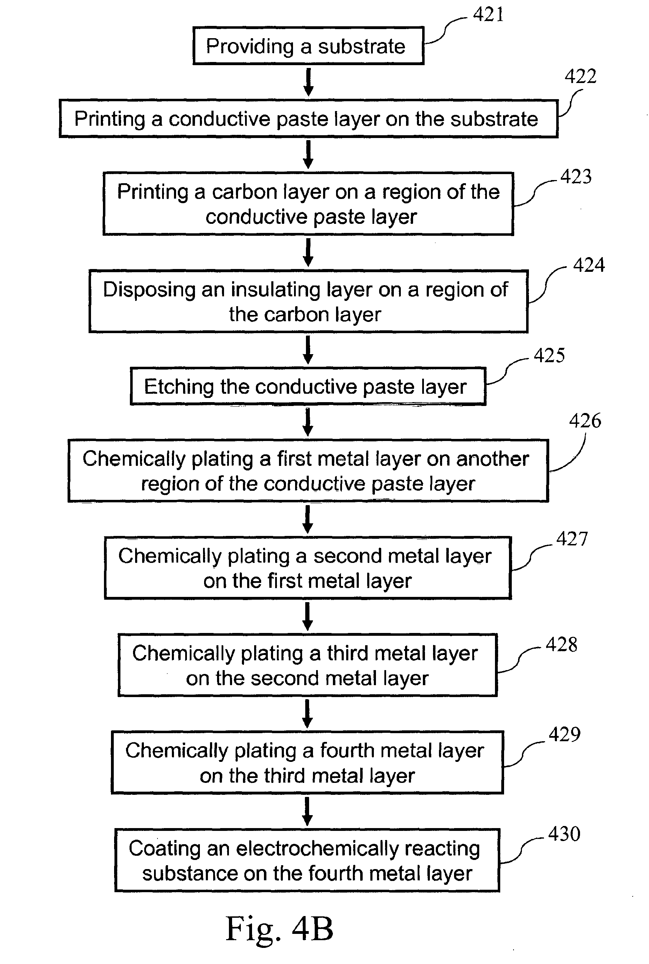

Referring to Fig. 4B, a manufacturing method of the electrochemical strip according to this example of the second embodiment of the present invention includes the following steps:
Step 421: Providing a substrate 21. The material used for the substrate 11 can be bio-inert plastic such as polyethylene terephthalate (PET), polycarbonate (PC), polyimide, glass fiber or phenolic resin.
Step 422: Disposing an electrode layer 22 on the substrate 21, including the step of printing a conductive paste layer 220 on the substrate 21. The conductive paste layer 220 is made of a material selected from the group consisting of copper paste, nickel paste, silver paste, and silver-carbon paste.
Step 423: Printing a carbon layer 25 on the regions 22b and 22c other than the region 22a of the conductive paste layer 220.
Step 424: Disposing an insulating layer 23 on a region 22b of the carbon layer 25 such that the region 22b includes only the insulating layer 23, the carbon layer 25, and the conductive paste layer 220 and is served for communicating a signal resulted from the electrochemical reaction.
Step 425: Etching the conductive paste layer 220, wherein the substrate 11 with the conductive paste layer 220 is etched by using plasma to eliminate the debris of the conductive paste layer 220, and then the surface of the conductive paste layer 220 is activated by acid-washing.
Step 426: Chemically plating a first metal layer 221 on the region 22a of the conductive paste layer 220, wherein the first metal layer is made of a group VIII metal.
Step 427: Chemically plating a second metal layer 222 on the first metal layer 221, wherein the second metal layer 222 is made of nickel (Ni).
Step 428: Chemically plating a third metal layer 223 on the second metal layer 222, wherein the third metal layer 223 is made of a group VIII metal.
Step 429: Chemically plating a fourth metal layer 224 on the third metal layer 223, wherein the fourth metal layer 224 is made of a material selected from the group consisting of palladium (Pd), gold (Au) and platinum (Pt).
Step 430: Coating an electrochemically reacting substance 24 on the fourth metal layer 224.

Additionally, the substrate 21, the conductive paste layer 220, the first metal layer 221, the second metal layer 222, the third metal layer 223, and the fourth metal layer 224 said in the first and the second examples of the second embodiment, and the materials used therein, are almost the same as those said in the first embodiment, thus not described repeatedly here.

In the first embodiment of the present invention, the electrochemical strip 1 includes a substrate 11, an electrode 12 disposed on the substrate 11, and an insulating layer 13 disposed on the electrode 12. The material used for substrate 11 can be bio-inert plastic such as polyethylene terephthalate (PET), polycarbonate (PC), polyimide, glass fiber or phenolic resin.

Additionally, the substrate 11 with the conductive paste layer 120 is immersed in a first electrolytic solution containing the group VIII metal ions before plating the first metal layer 121, wherein the first electrolytic solution not only controls the electrolytic temperature and time but also adjusts the ion concentration of the group VIII metal and appropriate pH level in the first electrolytic solution.

The immersing process used for chemically plating the first metal layer 121 is also used for chemically plating the second metal layer 122, the third metal layer 123, and the fourth metal layer 124. However, the electrolytic solution used in chemically plating the first metal layer 121 is different from that used in plating the second metal layer 122, the third metal layer 123, and the fourth metal layer 124. For example, the substrate 11 plated with the first metal layer 121 is immersed in a second electrolytic solution containing nickel (Ni) ions to plate the second metal layer 122 on the first metal layer 121.

By the same way, the substrate 11 plated with the first metal layer 121 and the second metal layer 122 is immersed in a third electrolytic solution containing the group VIII metal ions to plate the third metal layer 123 on the second metal layer 122; the substrate 11 plated with the first metal layer 121, the second metal layer 122, and the third metal layer 123, is immersed in a fourth electrolytic solution containing the group VIII metal ions selected from palladium (Pd) ion, gold (Au) ion, and platinum (Pt) ion to plate the fourth metal fourth layer 124 on the third metal layer 123.

Moreover, as the role of the first electrolytic solution in chemically plating, the second electrolytic solution, the third electrolytic solution, and the fourth electrolytic solution not only control the electrolytic temperature and time, but also adjust the ion concentration of metals and appropriate pH level in the electrolytic solution mentioned above.

The present invention is disclosed above by preferred embodiments. However, persons skilled in the art should understand that the preferred embodiments are illustrative of the present invention only, but should not be interpreted as restrictive of the scope of the present invention. Persons skilled in the art are able to understand and implement the above disclosure of the present invention.

## Claims

1. A manufacturing method of an electrochemical strip, comprising steps of:
providing a substrate made of a material selected from the group consisting of polyethylene terephthalate (PET), polycarbonate (PC), polyimide, glass fiber and phenolic resin; and
disposing an electrode layer on the substrate, which comprising steps of:
printing a conductive paste layer on the substrate;
etching a first region of the conductive paste layer;
chemically plating a first metal layer on the first region of the conductive paste layer;
chemically plating a second metal layer on the first metal layer;
chemically plating a third metal layer on the second metal layer; and
chemically plating a fourth metal layer on the third metal layer;
wherein the first metal layer is made of a group VIII metal, the second metal layer is made of nickel (Ni), the third metal layer is made of a group VIII metal, and the fourth metal layer is made of a metal selected from the group consisting of palladium (Pd), gold (Au) and platinum (Pt).

2. The manufacturing method of the electrochemical strip as recited in claim 1, wherein the step of printing the conductive paste layer on the substrate is printing a silver paste on the substrate.

3. The manufacturing method of the electrochemical strip as recited in claim 1, wherein the step of chemically plating the first metal layer on the conductive paste layer is chemically plating a layer of palladium (Pd) on the conductive paste layer.

4. The manufacturing method of the electrochemical strip as recited in claim 1, wherein the step of chemically plating the third metal layer on the second metal layer is chemically plating a layer of palladium (Pd) on the second metal layer.

5. The manufacturing method of the electrochemical strip as recited in claim 1, further comprising a step of disposing an insulating layer on a second region of the conductive paste layer with the second region excluding the first metal layer.

6. The manufacturing method of the electrochemical strip as recited in claim 1, further comprising a step of coating an electrochemically reacting substance on the fourth metal layer.

7. An electrochemical strip, comprising:
a substrate made of a material selected from the group consisting of polyethylene terephthalate (PET), polycarbonate (PC), polyimide, glass fiber and phenolic resin;
a printed conductive paste layer disposed on the substrate;
a first metal layer disposed partly on the conductive paste layer;
a second metal layer disposed on the first metal layer;
a third metal layer disposed on the second metal layer; and
a fourth metal layer disposed on the third metal layer;
wherein the first metal layer is made of a group VIII metal, the second metal layer is made of nickel (Ni), the third metal layer is made of a group VIII metal, and the fourth metal layer is made of a metal selected from the group consisting of palladium (Pd), gold (Au) and platinum (Pt).

8. The electrochemical strip as recited in claim 7, wherein the conductive paste layer is made of a material selected from the group consisting of copper paste, nickel paste, silver paste, and silver carbon paste.

9. The electrochemical strip as recited in claim 7, wherein the first metal layer is made of palladium (Pd).

10. The electrochemical strip as recited in claim 7, wherein the third metal layer is made of palladium (Pd).

11. The electrochemical strip as recited in claim 7, further comprising an insulating layer disposed partly on the conductive paste layer; wherein a region consisting of the conductive paste layer, the first metal layer, the second metal layer, the third metal layer, and the fourth metal layer is served as a region for an electrochemical reaction to be detected on the electrochemical strip, while a region consisting of the insulating layer and the conductive paste layer is served as a region for communicating a signal resulted from the electrochemical reaction.

12. The electrochemical strip as recited in claim 11, wherein a material for the electrochemical reaction is coated on the region consisting of the conductive paste layer, the first metal layer, the second metal layer, the third metal layer, and the fourth metal layer.

13. The electrochemical strip as recited in claim 7, further comprising a carbon layer printed partly on the conductive paste layer and an insulating layer disposed partly on the carbon layer; wherein a first region consisting of the conductive paste layer, the first metal layer, the second metal layer, the third metal layer, and the fourth metal layer is served as a region for an electrochemical reaction to be detected on the electrochemical strip, a second region consisting of the insulating layer, the carbon layer, and the conductive paste layer is served as a region for communicating a signal resulted from the electrochemical reaction, and a third region consisting of the carbon layer and the conductive paste layer is served as a region for connecting the electrochemical strip and the bio-testing apparatus.

## Patentansprüche

1. Verfahren zur Herstellung eines elektrochemischen Streifens, umfassend die Prozessschritte:
Bereitstellen eines Substrats aus einem Material der Gruppe aus Polyethylenterephthalat (PET), Polykarbonat (PC), Polyimid, Glasfasern und Phenolharz ausgewählt ist, und
Aufbringen einer Elektrodenschicht auf das Substrat, welches die Schritte umfasst:
Drucken einer Schicht leitfähiger Paste auf das Substrat,
Ätzen einer ersten Region der Schicht leitfähiger Paste,
chemisches Plattieren einer ersten Metallschicht auf die erste Region der Schicht leitfähiger Paste,
chemisches Plattieren einer zweiten Metallschicht auf die erste Metallschicht,
chemisches Plattieren einer dritten Metallschicht auf die zweite Metallschicht, und
chemisches Plattieren einer vierten Metallschicht auf die dritte Metallschicht,
wobei die erste Metallschicht aus einem Metall der Elementgruppe VIII, die zweite Metallschicht aus Nickel (Ni), die dritte Metallschicht aus einem Metall der Elementgruppe VIII und die vierte Metallschicht aus einem Metall aus der Gruppe bestehend aus Palladium (Pd), Gold (Au) und Platin (Pt) gebildet ist.

2. Verfahren zur Herstellung eines elektrochemischen Streifens gemäß Anspruch 1, wobei der Schritt des Druckens der Schicht leitfähiger Paste auf das Substrat das Drucken von Silberpaste auf das Substrat umfasst.

3. Verfahren zur Herstellung eines elektrochemischen Streifens gemäß Anspruch 1, wobei der Schritt des chemischen Plattierens der ersten Metallschicht auf die Schicht leitfähiger Paste das chemische Plattieren einer Schicht Palladium (Pd) auf die Schicht leitfähiger Paste umfasst.

4. Verfahren zur Herstellung eines elektrochemischen Streifens gemäß Anspruch 1, wobei der Schritt des chemischen Plattierens der dritten Metallschicht auf die zweite Metallschicht das chemische Plattieren einer Schicht Palladium (Pd) auf die zweite Metallschicht umfasst.

5. Verfahren zur Herstellung eines elektrochemischen Streifens gemäß Anspruch 1, weiter umfassend einen Schritt des Aufbringens einer isolierenden Schicht auf eine zweite Region der Schicht leitfähiger Paste, wobei die zweite Region die erste Metallschicht ausschließt.

6. Verfahren zur Herstellung eines elektrochemischen Streifens gemäß Anspruch 1, weiter umfassend einen Schritt des Beschichtens einer elektrochemisch reaktiven Substanz auf die vierte Metallschicht.

7. Elektrochemischer Streifen, umfassend:
ein Substrat, das aus einem Material der Gruppe bestehend aus Polyethylenterephthalat (PET), Polykarbonat (PC), Polyimid, Glasfasern und Phenolharz ausgewählt ist,
eine gedruckte Schicht leitfähiger Paste, die auf das Substrat aufgebracht ist,
eine erste Metallschicht, die teilweise auf die Schicht leitfähiger Paste aufgebracht ist,
eine zweite Metallschicht, die auf die erste Metallschicht aufgebracht ist,
eine dritte Metallschicht, die auf die zweite Metallschicht aufgebracht ist, und
eine vierte Metallschicht, die auf die dritte Metallschicht aufgebracht ist,
wobei die erste Metallschicht aus einem Metall der Elementgruppe VIII, die zweite Metallschicht aus Nickel (Ni), die dritte Metallschicht aus einem Metall der Elementgruppe VIII und die vierte Metallschicht aus einem Metall aus der Gruppe bestehend aus Palladium (Pd), Gold (Au) und Platin (Pt) besteht.

8. Elektrochemischer Streifen gemäß Anspruch 7, wobei die Schicht leitfähiger Paste aus einem Material gebildet ist, das aus der Gruppe bestehend aus Kupferpaste, Nickelpaste, Silberpaste und Silber-Kohlenstoffpaste ausgewählt ist.

9. Elektrochemischer Streifen gemäß Anspruch 7, wobei die erste Metallschicht aus Palladium (Pd) gebildet ist

10. Elektrochemischer Streifen gemäß Anspruch 7, wobei die dritte Metallschicht aus Palladium (Pd) gebildet ist.

11. Elektrochemischer Streifen gemäß Anspruch 7, der weiterhin eine isolierende Schicht umfasst, welche teilweise auf die Schicht leitfähiger Paste aufgebracht ist, wobei eine Region bestehend aus der Schicht leitfähiger Paste, der ersten Metallschicht, der zweiten Metallschicht, der dritten Metallschicht und der vierten Metallschicht als eine Region zur Detektion einer elektrochemischen Reaktion auf dem Streifen dient, während eine Region bestehend aus der isolierenden Schicht und der Schicht leitfähiger Paste als Region zur Kommunikation eines Signals resultierend aus der elektrochemischen Reaktion dient.

12. Elektrochemischer Streifen gemäß Anspruch 11, wobei ein Material für die elektrochemische Reaktion auf die Region abgeschieden ist, die aus der Schicht leitfähiger Paste, der ersten Metallschicht, der zweiten Metallschicht, der dritten Metallschicht und der vierten Metallschicht besteht

13. Elektrochemischer Streifen gemäß Anspruch 7, der weiterhin eine Kohlenstoffschicht, welche teilweise auf die Schicht leitfähiger Paste gedruckt ist, und eine isolierende Schicht umfasst, welche teilweise auf die Kohlenstoffschicht aufgebracht ist, wobei eine erste Region bestehend aus der Schicht leitfähiger Paste, der ersten Metallschicht, der zweiten Metallschicht, der dritten Metallschicht und der vierten Metallschicht als eine Region zur Detektion einer elektrochemischen Reaktion auf dem Streifen dient, eine zweite Region bestehend aus der isolierenden Schicht, der Kohlenstoffschicht und der Schicht leitfähiger Paste als Region zur Kommunikation eines Signals resultierend aus der elektrochemischen Reaktion dient und eine dritte Region bestehend aus der Kohlenstoffschicht und der Schicht leitfähiger Paste als Region zum Kontakt zwischen dem elektrochemischen Streifen und dem Bio-Test-Gerät dient.

## Revendications

1. Procédé de fabrication d'une bande d'essai électrochimique comprenant les étapes de :
fournir un substrat fait en un matériau sélectionné dans le groupe comportant le polyéthylène téréphtalate (PET), le polycarbonate (PC), le polyimide, la fibre de verre et la résine phénolique et
disposer une couche d'électrode sur le substrat qui comprend les étapes de :
imprimer une couche de pâte conductrice sur le substrat ;
graver une première région de la couche de pâte conductrice ;
application chimique d'une première couche de métal sur la première région de la couche de pâte conductrice ;
application chimique d'une seconde couche de métal sur la première couche de métal ;
application chimique d'une troisième couche de métal sur la seconde couche de métal et
application chimique d'une quatrième couche de métal sur la troisième couche de métal,
dans lequel la première couche de métal est faite d'un métal du groupe VIII, la seconde couche de métal est faite en nickel (Ni), la troisième couche de métal est faite en un métal du groupe VIII et la quatrième couche de métal est faite en un métal sélectionné dans le groupe comportant le palladium (Pd), l'or (Au) et le platine (Pt).

2. Procédé de fabrication de la bande d'essai électrochimique selon la revendication 1 dans lequel l'étape d'imprimer la couche de pâte conductrice sur le substrat est l'impression d'une pâte d'argent sur le substrat.

3. Procédé de fabrication de la bande d'essai électrochimique selon la revendication 1 dans lequel l'étape d'application chimique de la première couche de métal sur la couche de pâte conductrice est l'application chimique d'une couche de palladium (Pd) sur la couche de pâte conductrice.

4. Procédé de fabrication de la bande d'essai électrochimique selon la revendication 1 dans lequel l'étape d'application chimique de la troisième couche de métal sur la seconde couche de métal est l'application chimique d'une couche de palladium (Pd) sur la seconde couche de métal.

5. Procédé de fabrication de la bande d'essai électrochimique selon la revendication 1 comprenant de plus une étape de disposer une couche d'isolation sur une seconde région de la couche de pâte conductrice avec la seconde région qui exclue la première couche de métal.

6. Procédé de fabrication de la bande d'essai électrochimique selon la revendication 1 comprenant de plus une étape de revêtement d'une substance à réaction électrochimique sur la quatrième couche de métal.

7. Bande d'essai électrochimique comprenant :
un substrat fait en un matériau sélectionné dans le groupe comportant le polyéthylène téréphtalate (PET), le polycarbonate (PC), le polyimide, la fibre de verre et la résine phénolique,
une couche de pâte conductrice imprimée disposée sur le substrat,
une première couche de métal disposée partiellement sur la couche de pâte conductrice,
une seconde couche de métal disposée sur la première couche de métal,
une troisième couche de métal disposée sur la seconde couche de métal et
une quatrième couche de métal disposée sur la troisième couche de métal,
la première couche de métal étant faite en un métal du groupe VIII, la seconde couche de métal étant faite en nickel (Ni), la troisième couche de métal étant faite en un métal du groupe VIII et la quatrième couche de métal étant faite en un métal sélectionné dans le groupe comportant le palladium (Pd), l'or (Au) et le platine (Pt).

8. Bande d'essai électrochimique selon la revendication 7 dans laquelle la couche de pâte conductrice est faite en un matériau sélectionné dans le groupe comportant la pâte de cuivre, la pâte de nickel, la pâte d'argent et la pâte de carbone argent.

9. Bande d'essai électrochimique selon la revendication 7 dans laquelle la première couche de métal est faite en palladium (Pd).

10. Bande d'essai électrochimique selon la revendication 7 dans laquelle la troisième couche de métal est faite en palladium (Pd).

11. Bande d'essai électrochimique selon la revendication 7 comprenant de plus une couche d'isolation disposée partiellement sur la couche de pâte conductrice, une région consistant en la couche de pâte conductrice, la première couche de métal, la seconde couche de métal, la troisième couche de métal et la quatrième couche de métal servant de région pour une réaction électrochimique à détecter sur la bande d'essai électrochimique tandis qu'une région consistant en la couche d'isolation et la couche conductrice sert de région pour communiquer un signal qui résulte de la réaction électrochimique.

12. Bande d'essai électrochimique selon la revendication 11 dans laquelle un matériau pour la réaction électrochimique est revétu sur la région consistant en la couche de pâte conductrice, la première couche de métal, la seconde couche de métal, la troisième couche de métal et la quatrième couche de métal.

13. Bande d'essai électrochimique selon la revendication 7 comprenant de plus une couche de carbone imprimée partiellement sur la couche de pâte conductrice et une couche d'isolation disposée partiellement sur la couche de carbone, une première région consistant en la couche de pâte conductrice, la première couche de métal, la seconde couche de métal, la troisième couche de métal et la quatrième couche de métal servant de région pour une réaction électrochimique à détecter sur la bande d'essai électrochimique, une seconde région consistant en la couche d'isolation, la couche de carbone et la couche de pâte conductrice servant de région pour communiquer un signal qui résulte de la réaction électrochimique et une troisième région consistant en la couche de carbone et la couche de pâte conductrice servant de région pour relier la bande d'essai électrochimique et l'appareil d'essai biologique.
